# EUROPÄISCHE PATENTSCHRIFT

(11) **EP 0 759 705 B1**
(45) Veröffentlichungstag und Bekanntmachung des Hinweises auf die Patenterteilung: **30.09.1998**
(21) Anmeldenummer: 95918577.8
(22) Anmeldetag: 20.04.1995
(51) Int. Cl.: A23J 1/00, C11B 1/10, A23J 1/02

(54) **VERFAHREN ZUR GEWINNUNG VON ISOLIERTEN MYOFIBRILLÄREN PROTEINEN AUS SEPARATORFLEISCH**
PROCESS FOR RECOVERING ISOLATED MYOFIBRIL PROTEINS FROM SEPARATOR MEAT
PROCEDE DE RECUPERATION DES PROTEINES DES MYOFIBRILLES ISOLEES DE VIANDE MECANIQUEMENT SEPAREE

(30) Priorität: 20.05.1994 DE 4417730
(43) Veröffentlichungstag der Anmeldung: 05.03.1997
(73) Patentinhaber: WESTFALIA SEPARATOR AG, 59302 Oelde (DE)
(72) Erfinder: TRZISZKA, Tadeusz L., 55-100 Trzebnica (PL); KOPEC, Wiestaw, 52-428 Wroclaw (PL); DÜPJOHANN, Josef, 59302 Oelde (DE); GEISSEN, Klemens, 59302 Oelde (DE)
(86) Internationale Anmeldenummer: EP9501495
(87) Internationale Veröffentlichungsnummer: WO9531906

(56) Entgegenhaltungen:
- EP-A- 0 244 157
- WO-A-91/03305
- FR-A- 2 160 878
- US-A- 3 523 800
- US-A- 5 384 149
- FLEISCHWIRTSCHAFT, Bd. 73, Nr. 9, 1993 Seiten 1069-1071, T.L. TRZISKA ET AL 'ISOLIERTE MYOFIBRILLÄRE PROTEINE AUS MECHANISCH SEPARIERTEM GEFLÜGELFLEISCH'
- JOURNAL OF FOOD SCIENCE, Bd. 53, Nr. 5, 1988 CHICAGO, Seiten 1290-1293, XP 000000633 KING AND EARL 'extraction of protein from slurries of unfrozen and frozen/thawed dark, ground turkey meat and skin with selected potassium and sodium salts'
- JOURNAL OF FOOD SCIENCE, Bd. 53, Nr. 5, 1988 CHICAGO, Seiten 1287-1289, XP 000000632 DUDZIAK AND FOEGEDING 'isolation of actomyosin and myosin form post-rigor turkey breast and thigh'
- JOURNAL OF FOOD SCIENCE, Bd. 36, Nr. 1, 1971 Seiten 133-137, WU AND SAYRE 'MYOSIN STABILITY IN INTACT CHICKEN MUSCLE AND A PROTEIN COMPONENT AFTER AGING'

## Beschreibung

Die Erfindung bezieht sich auf ein Verfahren zur Gewinnung von isolierten myofibrillären Proteinen aus Separatorfleisch, bei dem mechanisch separiertes Fleisch von Schlachttieren, insbesondere Geflügelfleisch, mit einer Extraktionsflüssigkeit in einer ersten Mischeinrichtung zu einem Fleischbrei vermischt, der Fleischbrei zwecks Abscheidung von Bindegewebspartikeln und Knochenteilchen einer ersten Zentrifuge zugeführt und der Fleischbrei anschließend in einer zweiten Zentrifuge aufgetrennt wird in eine proteinhaltige Feststoffphase und eine flüssige Phase.

Der wachsende Verzehr von Geflügelfleisch, insbesondere von Brustmuskelfilets, aber auch von anderen geeigneten Körperteilen, macht es notwendig, die übrigen Schlachtkörperteile mechanisch zu entbeinen. Dabei gewinnt man das sogenannte Separatorfleisch. In feinzerkleinerter Form hat das Separatorfleisch außer hochwertigen myofibrillären Proteinen auch einen hohen Anteil an Bindegewebe, Hämfarbstoffen, Metallen sowie hochoxydierbarem Fett. Als Bestandteil von Fleischprodukten ist das Separatorfleisch daher nur begrenzt tauglich mit Hinblick auf eine gesunde Ernährung. Die besonders in technologisch hochentwickelten Ländern ständig steigende Produktion von Separatorfleisch zwingt zur Entwicklung eines geeigneten Verfahrens zur wirtschaftlichen Verwertung des Separatorfleisches.

In der Zeitschrift "Fleischwirtschaft 73 (9), 1993" wird bereits ein Verfahren zur Gewinnung isolierter myofibrillärter Proteine aus mechanisch separierten Geflügelfleisch beschrieben, bei dem als Extraktionsflüssigkeit eine NaHCO₃-Lösung verwendet wird. Dieses Lösungsmittel ist jedoch für die weitere Verarbeitung des Produktes nachteilig. Bei dem bekannten Verfahren wird zur Abtrennung von Bindegewebspartikeln eine Siebzentrifuge eingesetzt. Mit dieser Zentrifuge können die im Produkt vorhandenen Sehnen nicht optimal abgetrennt werden. Außerdem kann es zu Verstopfung der Zentrifuge kommen.

Der Erfindung liegt die Aufgabe zugrunde, ein Verfahren zu schaffen, mit dem eine vollständige und störungsfreie Abscheidung von Bindegewebspartikeln erreicht wird, um aus Separatorfleisch hochwertige isolierte myofibrilläre Proteine zu gewinnen.

Diese Aufgabe wird dadurch gelöst, daß als Extraktionsflüssigkeit eine Salzlösung verwendet wird, die entweder aus den Chloriden von Natrium und/oder Kalium mit einer Ionenstärke von 0,1 bis 0,24 M oder aus den Chloriden von Calcium und/oder Magnesium mit einer Ionenstärke von 0,05 bis 0,12 M oder aus einer beliebigen Kombination der Chloriede von Natrium, Kalium, Calcium oder Magnesium mit einer Ionenstärke von 0,1 bis 0,24 M besteht, und daß das sich an der Oberfläche des verdünnten Fleischbreies absetzende Fett abgezogen wird, bevor der fettarme Fleischbrei zwecks Abscheidung der Bindegewebspartikel einer Vollmantel-Schneckenzentrifuge zugeführt wird und die proteinhaltige Feststoffphase durch eine selbstentleerende Zentrifuge abgeschieden werden.

Die Verwendung einer Salzlösung ist lebensmittelrechtlich unbedenklich und beeinflußt die Qualität des Endproduktes nicht nachteilig. Durch die Vollmantel-Schneckenzentrifuge werden die im Endprodukt unerwünschten Bestandteile wie Knochenteilchen und Sehnen mit den Fleischfragmenten abgetrennt, wobei durch die zuvorige Abscheidung des Fettes ein Zusetzen der Zentrifuge verhindert und somit ein störungsfreier Betrieb ermöglicht wird. Die Nebenprodukte kann man weiter verarbeiten zu Heimtierfutter. Mit der selbstentleerenden Zentrifuge werden die löslichen Proteine, Farbstoffe und eine wässrige Salzlösung von dem myofibrillären Protein-Isolat getrennt. Letzteres kann unmittelbar in Fleischverarbeitungsprozessen verwertet werden.

Vorteilhafte Ausgestaltungen der Erfindung sind in den Unteransprüchen wiedergegeben.

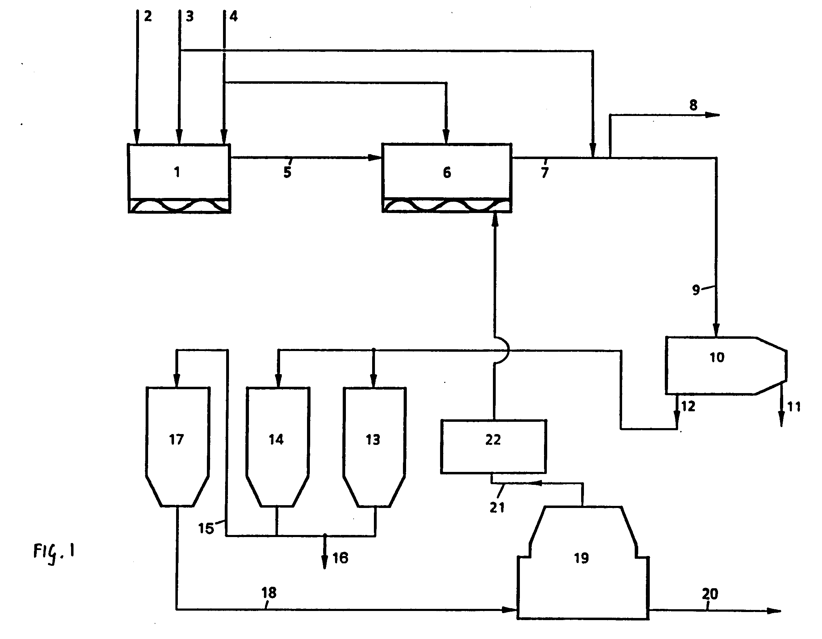

Ein Ausführungsbeispiel der Erfindung ist in der Zeichnung dargestellt und wird nachstehend näher erläutert.

Mit 1 ist in der Figur ein Mischer bezeichnet, in dem das Separatorfleisch 2 mit Eis 3 und einer Salzlösung 4 zu einem Fleischbrei 5 vermischt wird, der anschließend in einer Pumpe 6, die mit einer Mischeinrichtung versehen ist, mit einem weiteren Anteil Salzlösung 4 verdünnt wird. Der aus der Pumpe 6 austretende verdünnte Fleischbrei 7 wird mit Eis 3 versetzt, und das sich an der Oberfläche der verdünnten Fleischbrei 7 absetzende Fett 8 wird abgezogen, bevor der fettarme Fleischbrei 9 einer Vollmantel-Schneckenzentrifuge 10 zugeführt wird. In der Schneckenzentrifuge 10 werden die Knochenteilchen und Sehnen mit den Fleischfragmenten abgetrennt und als Feststoffphase 11 ausgetragen. Die aus der Schneckenzentrifuge 10 abgeleitete proteinhaltige Flüssigkeitsphase 12 wird einem der Sedimentationstanks 13 oder 14 zugeleitet, in denen eine Aufteilung in eine fettarme proteinhaltige Flüssigkeitsphase 15 und eine fettreiche Flüssigkeitsphase 16 erfolgt. Die aus den Sedimentationstanks 13 oder 14 abgezogene fettarme proteinhaltige Flüssigkeitsphase 15 wird in einem Mischtank 17 intensiv gerührt. Die homogene proteinhaltige Flüssigkeitsphase 18 wird einer selbstentleerenden Zentrifuge 19 zugeführt, in der eine Aufteilung in eine die isolierten myofibrillären Proteine enthaltende Feststoffphase 20 und eine flüssige Phase 21 erfolgt, die lösliche Proteine, Farbstoffe und wässrige Salzlösung enthält. Die flüssige Phase 21 wird über einen Kühler 22 geleitet und kann zur Verdünnung des Fleischbreies 5 in der Pumpe 6 benutzt werden.

Das Separatorfleisch 2 wird mit einer Temperatur von 0 - 5 °C dem Mischer 1 zugeführt, der mit einer Drehzahl von max. 60 Umdrehung pro Minute läuft und dort mit Schuppeneis 3 im Verhältnis 10 : 1 (Separatorfleisch : Eis) ein bis zwei Minuten lang zu einer homogenen Paste vermischt wird. Anschließend wird die Salzlösung 4 dem Mischer 1 zugeführt, wobei ein Gewichtsverhältnis zwischen Separatorfleisch 2 und Salzlösung 4 von 10 : 1 bis 10 : 5 (Separatorfleisch : Salzlösung) vorteilhaft ist. Die Mischdauer beträgt dabei mindestens weitere acht Minuten, in denen die Salzlösung 4 kontinuierlich in den Mischer geleitet wird. Die Salzlösung 4 kann hergestellt werden unter Verwendung der Chloride von Natrium oder Kalium (Pottasche) mit einer Konzentration von 0,1 bis 0,24 M. Es können aber auch Chloride von Kalzium (Calcium) oder Magnesium mit einer Konzentration von 0,05 bis 0,12 M verwendet werden. Bei beliebiger Mischung der vorgenannten Elemente ist darauf zu achten, daß die Ionenstärke im Bereich von 0,1 bis 0,24 µ liegt. Es kann vorteilhaft sein, der Salzlösung 4 zusätzlich NaNO₂ zuzusetzen, um Bakterien abzutöten und die Farbe des Produktes zu beeinflussen. In der mit einer Mischeinrichtung versehenen Pumpe 6 erfolgt eine weitere Verdünnung des Fleischbreies 5 mit der Salzlösung 4 auf ein Gewichtsverhältnis von 1 : 4 bis 1 : 6 (Separatorfleisch : Salzlösung). Dieser verdünnte Fleischbrei 5 wird mit Eis 3 im Verhältnis 10 : 1 bis 20 : 1 (Fleischbrei : Eis) vermischt und das sich absetztende Fett 8 an der Oberfläche des verdünnten Fleischbreies 5 abgeschöpft. Der fettarme Fleischbrei 9 wird in der Schneckenzentrifuge 10 von Knochenteilchen und Sehnen mit den Fleischfragmenten befreit, die als Feststoffphase 11 anfallen. Die aus der Schneckenzentrifuge 10 abgeleitete Flüssigkeitsphase 12 wird einem der Sedimentationstanks 13 oder 14 zugeführt in dem eine teilweise Sedimentation der myofibrillären Proteine stattfindet. An der Oberfläche der Suspension sondert sich noch vorhandenes Fett ab. Die Tanks 13 und 14 sind mit einer vertikal verlaufenden Glasscheibe versehen, durch die der Sedimentationsprozeß beobachtet werden kann, der unter Zugabe eines Eis/Wasser-Gemisches (1 : 1) im Verhältnis 0,05 : 1 bis 0,1 : 1 (Eis/Wasser : Suspension) beschleunigt abläuft. Durch die abwechselnde Füllung der Tanks kann der Prozeß kontinuierlich weiterlaufen. Nach beendigter Sedimentation wird zunächst die fettarme proteinhaltige Flüssigkeitsphase 15 aus dem Tank 13 bzw. 14 abgezogen bis die fettreiche Flüssigkeitsphase 16, die sich an der Oberfläche der proteinhaltigen Flüssigkeitsphase 15 abgesetzt hat, aus dem Tank 13 bzw. 14 abläuft. Die proteinhaltige Flüssigkeitsphase 15 wird im Mischtank 17 intensiv gerührt, um eine homogene proteinhaltige Flüssigkeitsphase 18 für die anschließende Behandlung in der selbstentleerenden Zentrifuge 19 zur Verfügung zu stellen. In der Zentrifuge 19 erfolgt eine Aufkonzentrierung der myofibrillären Proteine. Der proteinhaltige Feststoff hat eine Trockensubstanz von 11 - 15% die aus 10,5 - 14% Proteine, 0 - 0,6% Fett und 0,1 - 0,2% Mineralien besteht. Dieses Produkt kann unmittelbar in Fleischverarbeitungsprozessen verwendet werden.

## Patentansprüche

1. Verfahren zur Gewinnung von isolierten myofibrillären Proteinen aus Separatorfleisch, bei dem mechanisch separiertes Fleisch von Schlachttieren, insbesondere Geflügelfleisch, mit einer Extraktionsflüssigkeit in einer ersten Mischeinrichtung zu einem Fleischbrei vermischt, der Fleischbrei zwecks Abscheidung von Bindegewebspartikeln und Knochenteilchen einer ersten Zentrifuge zugeführt und der Fleischbrei anschließend in einer zweiten Zentrifuge aufgetrennt wird in eine proteinhaltige Feststoffphase und eine flüssige Phase, dadurch gekennzeichnet, daß als Extraktionsflüssigkeit eine Salzlösung verwendet wird, die entweder aus den Chloriden von Natrium und/oder Kalium mit einer Ionenstärke von 0,1 bis 0,24 M oder aus den Chloriden von Calcium und/oder Magnesium mit einer Ionenstärke von 0,05 bis 0,12 M oder aus einer beliebigen Kombination der Chloriede von Natrium, Kalium, Calcium oder Magnesium mit einer Ionenstärke von 0,1 bis 0,24 M besteht, und daß das sich an der Oberfläche des verdünnten Fleischbreies absetzende Fett abgezogen wird, bevor der fettarme Fleischbrei zwecks Abscheidung der Bindegewebspartikel einer Vollmantel-Schneckenzentrifuge zugeführt wird und die proteinhaltige Feststoffphase durch eine selbstentleerende Zentrifuge abgeschieden werden.

2. Verfahren nach Anspruch 1, dadurch gekennzeichnet, daß das mechanisch separierte Separatorfleisch vor der Zugabe der Extraktionsflüssigkeit mit Eis vermischt wird.

3. Verfahren nach Anspruch 2, dadurch gekennzeichnet, daß das Gewichtsverhältnis zwischen Separatorfleisch und Eis 10 : 1 beträgt.

4. Verfahren nach einem der Ansprüche 1 bis 3, dadurch gekennzeichnet, daß das Gewichtsverhältnis zwischen Separatorfleisch und Salzlösung zwischen 10 : 1 und 10 : 5 liegt.

5. Verfahren nach Anspruch 2 oder 3, dadurch gekennzeichnet, daß die Mischdauer von Separatorfleisch und Eis 1 bis 2 Minuten beträgt, wobei das Eis kontinuierlich zugeführt wird.

6. Verfahren nach einem der Ansprüche 1 bis 5, dadurch gekennzeichnet, daß die Zugabe der Salzlösung kontinuierlich unter ständigem Mischen über einen Zeitraum von mindestens 8 Minuten erfolgt.

7. Verfahren nach einem der Ansprüche 1 bis 6, dadurch gekennzeichnet, daß die Temperatur des Fleischbreies zwischen 0 und 5 °C beträgt.

8. Verfahren nach Anspruch 1, dadurch gekennzeichnet, daß bei Einsatz der Chloride von Natrium umd/oder Kalium die Ionenstärke der Salzlösung 0,15 M beträgt.

9. Verfahren nach Anspruch 1, dadurch gekennzeichnet, daß bei Einsatz der Chloride von Calcium und/oder Magnesium die Ionenstärke der Salzlösung 0,085 M beträgt.

10. Verfahren nach Anspruch 1, dadurch gekennzeichnet, daß bei Einsatz einer beliebigen Kombination der Chloride von Natrium, Kalium, Calcium oder Magnesium die Ionenstärke der Salzlösung 0,085 M beträgt.

11. Verfahren nach einem der Ansprüche 1 bis 10, dadurch gekennzeichnet, daß der Fleischbrei in einer zweiten Mischeinrichtung durch weitere Zugabe der Salzlösung auf ein Gewichtsverhältnis zwischen Separatorfleisch und Salzlösung von 1 : 4 bis 1 : 6 verdünnt wird.

12. Verfahren nach Anspruch 11, dadurch gekennzeichnet, daß eine Vermischung des verdünnten Fleischbreies mit Eis im Verhältnis von 10 : 1 bis 20 : 1 erfolgt.

13. Verfahren nach Anspruch 12, dadurch gekennzeichnet, daß die aus der Schneckenzentrifuge ablaufende proteinhaltige Flüssigkeitsphase in einen Sedimentationstank geleitet wird zwecks Aufteilung in eine fettarme proteinhaltige Flüssigkeitsphase und eine fettreiche Flüssigkeitsphase.

14. Verfahren nach Anspruch 13, dadurch gekennzeichnet, daß der proteinhaltigen Flüssigkeitsphase im Sedimentationstank ein Eis/Wasser-Gemisch von 1 : 1 im Verhältnis von 0,05 : 1 bis 0,1 : 1 zugegeben wird.

15. Verfahren nach Anspruch 13 oder 14, dadurch gekennzeichnet, daß die Verweilzeit im Sedimentationstank 30 bis 160 Minuten beträgt.

16. Verfahren nach einem der Ansprüche 13 bis 15, dadurch gekennzeichnet, daß die aus dem Sedimentationstank abgezogene fettarme proteinhaltige Flüssigkeitsphase in einen Mischtank geleitet wird, bevor sie der selbstentleerenden Zentrifuge zur Abtrennung der isolierten myofibrillären Proteine zugeführt wird.

## Claims

1. Process for the recovery of isolated myofibrillar proteins from separator meat in which mechanically separated meat from slaughtered animals, in particular poultry meat, is mixed to a meat broth with an extraction liquid in a first mixing device and the meat broth is fed to a first centrifuge for separation of connective tissue particles and bone fragments and subsequently separated in a second centrifuge into a protein-containing solids phase and a liquid phase, **characterised in that** a saline solution is used as extraction liquid, which either consists of the chlorides from sodium and/or potassium with an ionic strength of 0.1 to 0.24 M or of the chlorides from calcium and/or magnesium with an ionic strength of 0.05 to 0.12 M or of a random combination of the chlorides of sodium, potassium, calcium or magnesium with an ionic strength of 0.1 to 0.24 M, and that the fat deposited on the surface of the diluted meat broth is drawn off before the low-fat meat broth is fed to a solid-wall scroll centrifuge for separation of the connecting tissue particles and the protein-containing solids phase is separated by a self-cleaning centrifuge.

2. Process according to claim 1, characterised in that the mechanically separated separator meat is mixed with ice before adding the extraction liquid.

3. Process according to claim 2, characterised in that the weight ratio between separator meat and ice is 10 : 1.

4. Process according to one of the claims 1 to 3, characterised in that the weight ratio between separator meat and saline solution is between 10 : 1 and 10 : 5.

5. Process according to claim 2 or 3, characterised in that the mixing time of separator meat and ice is 1 to 2 minutes, whereby the ice is supplied continuously.

6. Process according to one of the claims 1 to 5, characterised in that the saline solution is continuously supplied and mixed for a period of at least 8 minutes.

7. Process according to one of the claims 1 to 6, characterised in that the temperature of the meat broth is between 0 and 5 °C.

8. Process according to claim 1, characterised in that when using the chlorides from sodium and/or potassium the ionic strength of the saline solution is 0.15 M.

9. Process according to claim 1, characterised in that when using the chlorides from calcium and/or magnesium the ionic strength of the saline solution is 0.085 M.

10. Process according to claim 1, characterised in that when using a random combination of the chlorides from sodium, potassium, calcium or magnesium the ionic strength of the saline solution is 0.085 M.

11. Process according to one of the claims 1 to 10, characterised in that the meat broth is diluted to a weight ratio between separator meat and saline solution of 1 : 4 to 1 : 6 by the further addition of saline solution in a second mixing device.

12. process according to claim 11, characterised in that mixing of the diluted meat broth with ice is at a ratio of 10 : 1 to 20 : 1.

13. Process according to claim 12, characterised in that the protein-containing liquid phase discharging from the scroll centrifuge is sent into a sedimentation tank for the purpose of separation into a low-fat protein-containing phase and a high-fat liquid phase.

14. Process according to claim 13, characterised in that an ice/water mixture of 1 : 1 is added to the protein-containing liquid phase in the sedimentation tank at a ratio of 0.05 : 1 to 0.1 : 1.

15. Process according to claim 13 or 14, characterised in that the dwell time in the sedimentation tank is 30 to 160 minutes.

16. Process according to one of the claims 13 to 15, characterised in that the low-fat protein-containing phase drawn out of the sedimentation tank is led into a mixing tank before it is sent to the self-cleaning centrifuge for separating the isolated myofibrillar proteins.

## Revendications

1. Procédé de récupération de protéines myofibrillaires isolées à partir de viande provenant d'un séparateur, dans ledit procédé de la viande animale, surtout de volailles, séparée mécaniquement, étant mélangée avec un liquide d'extraction dans un premier dispositif de mélange afin d'obtenir une pulpe de viande étant ensuite alimentée à une première centrifugeuse dans le but d'en séparer les particules de tissu conjonctif et les particules osseuses, la pulpe ainsi obtenue étant envoyée dans une deuxième centrifugeuse pour la faire séparer en une phase solide protéinée et une phase liquide, **caractérisé en ce que**, comme liquide d'extraction, on utilise une solution saline constituée soit par les chlorures de sodium et/ou de potassium d'une force ionique comprise entre 0,1 et 0,24 M, soit par des chlorures de calcium et/ou de magnésium d'une force ionique comprise entre 0,05 et 12 M, soit d'une combinaison quelquonque des chlorures de sodium, de potassium, de calcium ou de magnésium, d'une force ionique comprise entre 0,1 et 0,24 M, et que la graisse ayant sédimenté à la surface de la pulpe de viande diluée étant soutirée avant que la pulpe de viande pauvre en graisse est alimentée à une centrifugeuse à vis à paroi pleine dans le but d'en séparer les particules de tissu conjonctif, et la phase solide protéinée est séparée dans une centrifugeuse à bol auto-débourbeur.

2. Procédé selon revendication 1, caractérisé en ce que la viande séparée mécaniquement provenant d'un séparateur est mélangée avec de la glace avant que le liquide d'extraction est ajouté.

3. Procédé selon revendication 2, caractérisé en ce que le rapport pondéral entre la viande provenant du séparateur et la glace est de 10 : 1.

4. Procédé selon l'une des revendications 1 à 3, caractérisé en ce que le rapport pondéral entre la viande provenant du séparateur et la solution saline est compris entre 10 : 1 et 10 : 5.

5. Procédé selon l'une des revendications 2 ou 3, caractérisé en ce que la durée du mélange de la viande provenant du séparateur et la glace est de 1 à 2 minutes, la glace étant ajoutée en continu.

6. Procédé selon l'une des revendications 1 à 5, caractérisé en ce que l'addition de la solution saline s'effectue en continu, tout en mélangeant pendant une période d'au moins 8 minutes.

7. Procédé selon l'une des revendications 1 à 6, caractérisé en ce que la température de la pulpe de viande est comprise entre 0 et 5 °C.

8. Procédé selon revendication 1, caractérisé en ce que, en utilisant les chlorures de sodium et/ou de potassium, la force ionique de la solution saline est de 0,15 M.

9. Procédé selon revendication 1, caractérisé en ce que, en utilisant les chlorures de calcium et/ou de magnésium, la force ionique de la solution saine est de 0,085 M.

10. Procédé selon revendication 1, caractérisé en ce que, en utilisant une combinaison des chlorures de sodium, de potassium, de calcium ou de magnésium, la force ionique de la solution saline est de 0,085 M.

11. Procédé selon l'une des revendications 1 à 10, caractérisé en ce que la pulpe de viande est diluée dans une seconde unité de mélange par addition supplémentaire de solution saline, dans le but d'amener le rapport viande / solution saline de 1 : 4 à 1 : 6.

12. Procédé selon revendication 11, caractérisé en ce que la pulpe de viande diluée est mélangée avec de la glace à raison de 10 : 1 à 20 : 1.

13. Procédé selon revendication 12, caractérisé en ce que la phase liquide protéinée s'écoulant de la centrifugeuse à vis est dirigée vers une cuve de sédimention dans le but de la faire décomposer en une phase liquide protéinée pauvre en graisse et en une phase liquide enrichie de graisse.

14. Procédé selon revendication 13, caractérisé en ce que, dans la cuve de sédimentation, on ajoute un mélange glace/eau de 1:1 à la phase liquide protéinée à raison de 0,05 : 1 à 1 : 1.

15. Procédé selon l'une des revendications 13 ou 14, caractérisé en ce que la durée du séjour dans la cuve de sédimentation est comprise entre 30 et 160 minutes.

16. Procédé selon l'une des revendications 13 à 15, caractérisé en ce que la phase liquide protéinée pauvre en graisse, prélevée de la cuve de sédimentation, est envoyée dans une cuve de mélange avant d'être alimentée à la centrifugeuse à bol auto-débourbeur pour la récupération des protéines myofibrillaires isolées.
